# EUROPEAN PATENT SPECIFICATION

(11) **EP 0 848 910 B1**
(45) Date of publication and mention of the grant of the patent: **22.05.2002**
(21) Application number: 97120719.6
(22) Date of filing: 26.11.1997
(51) Int. Cl.: A23G 9/00, A23G 3/00, A23G 3/20

(54) **Marbled confectionery coating**
Marmoriertes Überzugsmittel für Konditorwaren
Revêtement marbré pour confiseries

(30) Priority: 20.12.1996 US 771788
(43) Date of publication of application: 24.06.1998
(73) Proprietor: SOCIETE DES PRODUITS NESTLE S.A., 1800 Vevey (CH)
(72) Inventor: Kuehl, Edward, Dublin, OH 43017 (US); Gray, Michael Peter, 60000 Beauvais (FR); Busse, Kurt, Radnor, OH 43066 (US)
(74) Representative: Pate, Frederick George

(56) References cited:
- EP-A- 0 503 254
- EP-A- 0 712 580
- EP-A- 0 775 448
- US-A- 5 283 070

## Description

### FIELD OF THE INVENTION

The present invention relates to a coating for ice cream having a marbled appearance.

### BACKGROUND OF THE INVENTION

It has not been possible heretofore to produce chocolate coatings having a marbled appearance formed from two layers of chocolate, principally because there is only a very short time period within which the second layer must be applied to the first layer in order to achieve satisfactory adherence. The chocolate layers are usually applied in liquid form either by spraying, pouring or dipping in a cold environment and very soon after the first layer has been applied ( less than 30 seconds), it glazes over to form a frost of condensation which prevents the second liquid layer from adhering.

US-A-5 283 070 concerns a process for preparing a layered ice cream cone which comprises vertically extruding under rotation an aerated ice cream composition in the form of a helix having spaced flights which define passages between which a second non-aerated composition, preferably a fat-based, preferably chocolate composition is sprayed from a fixed circular nozzle and the composite frozen confection is filled into a container, preferably a wafer cone. The resulting product has a body of layered ice cream with thin crispy flakes of chocolate between the layers. The appearance of the product from the top may be marbled but this is throughout the body of the frozen confection and not as a decorated coating.

EP-A-0 503 254 is related to an apparatus for distributing decorated soft ice cream portions. It consists in co-extruding a core of soft ice cream with a fruit purée at the periphery into containers, whereby the fruit purée is arranged in decorative coloured stripes at the surface and the walls of the containers and the stripes do not mix-up with the ice cream mass. In an alternative embodiment, the fruit purée can be disposed as a core within the body of the ice cream mass. Thus the product may have a striped appearance at the surface.

EP-A-0 712 580 is concerned with a method of dispensing a multicoloured ice confection product into a container in order to achieve a marbled or rather a swirl effect. This is done through a paddle extruder comprising a mixing chamber in which a first stream of ice confection is introduced at the top and a second stream of ice confection of different colour or a sauce or sirup is introduced into the extruder downstream of the first input and adjacent the outlet. The composite product thus obtained has a decorative ripple or swirl appearance throughout its body.

We have now devised methods of obtaining coatings having a marbled appearance which coating material may be not only chocolate but also non-aerated ice cream mixes or mixes of similar composition, sorbets, water ices and fruit purees as well as confectionery or ice cream products having a coating made of any of the above materials formed from two layers whereby the second layer adheres satisfactorily to the first layer.

In this invention, "marbled appearance" as hereinafter used means a random or regular surface pattern of more than one shape or colour. For instance, it may include patterns or appearances such as marbled, mottled, hued, variegated, dappled, clouded, drizzle, grizzle, splattered, blown, striped, spotted, speckled, striated, veined or flecked, etc.

### SUMMARY OF THE INVENTION

According to the present invention there is provided a coated ice confectionery product comprising a core of ice confectionery,
a first coating material which entirely recovers the core with a continuous layer,
a second coating material raised over the first coating and directly adhered to the first coating and which is in the form of projected streams or spots forming a drizzle, striped, striated, veined or splattered pattern all over the surface of the first coating.

### DETAILED DESCRIPTION OF THE INVENTION

The coating is prepared from a coating material which may be chocolate, or a water-based material such as creamy mixes, non-aerated ice cream mixes, sorbets, water ices or fruit purees.

Preferably, the coating consists of more than one type of coating material, for instance, a material of two different colours. Advantageously, the coating is formed from two layers of coating material. The layers may be continuous or discontinuous.

Particularly attractive coatings may have the appearance of a dipped bar with a generally linear marbled effect, a blown bar with a less linear marbled effect, drizzle with a roughly continuous stripe or random spots, or splatter with a roughly discontinuous stripe.

When the coating is a chocolate coating, it preferably consists of more than one type of chocolate, especially two types of chocolate. Advantageously, the chocolate coating is formed from two layers of chocolate. The chocolate layers may be continuous or discontinuous. Preferably, the layers of the chocolate coating formed from two layers of chocolate are formed from different chocolates and more especially from chocolates of different colours, e.g. plain chocolate, milk chocolate or white chocolate. Coatings in which one layer consists of either milk or plain chocolate and the other layer consists of white chocolate are the most interesting visually because there may be a marked contrast between the milk or plain chocolate and the white chocolate. Each layer of chocolate has a thickness of from, for example, 0.1 to 2mm, preferably from 0.25 to 1.5mm and especially from 0.5 to 1.0mm.

The chocolate may be, for instance, ordinary chocolate according to accepted regulations or it may be a fat containing confectionery compound material containing sugar, milk derived components, and fat and solids from vegetable or cocoa sources in differing proportions having a moisture content less than 10%, more usually less than 5% by weight. The fat-containing material may be a chocolate substitute containing direct cocoa butter replacements, stearines, coconut oil, palm oil, butter or any mixture thereof; nut pastes such as peanut butter and fat; praline; confectioner's coatings used for covering cakes usually comprising chocolate analogues with cocoa butter replaced by a cheaper non-tempering fat; or "Caramac" sold by Nestlé comprising non-cocoa butter fats, sugar and milk.

When the coating is a water-based material, it may be a water-based creamy mix, a non-aerated ice cream mix without overrun, a coloured or flavoured sorbet, water ice or fruit puree of a suitable viscosity provided there were no fibrous pieces of significant size present. The water-based creamy mix contains at least 10% water, more usually at least 25% by weight water, preferably from 30 to 70% and more preferably from 35 to 60% by weight water together with from, for instance, 2.5 to 10% cream, 15-25% white chocolate, sugar and emulsifiers, optionally with colouring material.

The confectionery or ice cream product which is coated with the coating having a marbled appearance may be, for instance, ice cream or it may be any other confectionery product which may conventionally be coated with chocolate or other materials, e.g. praline, cake, fondant or other filling.

For preparing a coating having a marbled appearance one may lay strips of liquid coating material across a mould, modify the surface or configuration of the strips and solidify the coating material.

The mould used may be a conventional confectionery mould such as a polycarbonate mould having the appropriate design. The strips of coating material may be laid, preferably in a random manner on the mould, by means of one or more nozzles through which the coating material flows. The diameter of the openings of the nozzles may be from 1 to 4mm and preferably from 2 to 3mm. The strips may consist of only one type of coating material but preferably consist of two types of coating material. The surface or configuration of the strips may be modified by either an air stream blowing onto the surface or by dragging one or more probes across the surface to give random or streaked effects forming surface impressions. Following the modification of the surface or configuration of the strips, and preferably before any significant degree of solidification of the strips occurs, the mould may be filled with an appropriate coating material and afterwards shelled by conventional confectionery techniques. Finally, a filling, e.g. ice cream, and if desired, a stick may be added. Alternatively, two corresponding halves of the strips may be joined together with or without a seal: the filling, e.g. ice cream, and if desired, a stick may be added before or after joining the two halves.

The present invention also provides a process for preparing a confectionery or ice cream product with a coating having a drizzle appearance with a roughly continuous stripe formed from two layers of coating material which comprises applying a first coating material to the confectionery product by enrobing, spraying or dipping to coat the confectionery product with a first layer of coating material, and then projecting a continuous stream of a second coating material randomly past the coated confectionery product and solidifying the coating.

One example of a process for preparing a confectionery or ice cream product with a coating having a drizzle appearance with a roughly continuous stripe formed from two layers of coating material comprises dipping the confectionery or ice cream product into a first coating material within a container to coat the confectionery or ice cream product, withdrawing the coated confectionery or ice cream product from the container and then projecting a continuous stream of a second coating material randomly past the coated confectionery product and solidifying the coating.

The present invention also provides a process for preparing a confectionery product with a coating having a splatter appearance with a roughly discontinuous stripe formed from two layers of coating material which comprises applying a first coating material to the confectionery product by enrobing, spraying or dipping to coat the confectionery product with a first layer of coating material, and then projecting a discontinuous stream of a second coating material randomly past the coated confectionery product by interrupting the flow of the second coating material and solidifying the coating.

In the above processes for preparing a confectionery product with a coating having a drizzle or a splatter appearance, the projection of the continuous or discontinuous stream of the second coating material may be carried out by moving spray nozzles or by means of centrifugal force of a spinning device. The nozzles may be operated by a pump generating a pressure of from, e.g. 344.75 x 10³ to 1034.25 x 10³ Pa (50 to 150psi), and preferably from 517.125 x 10³ to 861.875 x 10³ Pa (75 to 125psi). The second coating material may be fed on to the upper surface of the spinning device. The spinning device is preferably a disc. The disc is preferably elliptical in shape and the flat surface may advantageously be inclined from the horizontal, e.g. up to 30° and preferably from 5 to 25°.

In one advantageous embodiment of the present invention, a confectionery product with a coating having the appearance of either stripes or spots may be obtained by applying a first coating material to the confectionery product by enrobing, spraying or dipping to coat the confectionery product with a first layer of coating material, and then passing the confectionery product between the opposing faces of a pair of spinning discs from which are projected streams of a second coating material by centrifugal force onto the coated confectionery product, and then solidifying the coating. The second coating material may be applied to the spinning discs by pumping the coating material through tubing, e.g. stainless steel, onto the spinning discs.

The spinning discs may be made of stainless steel. They may be circular or elliptical and may be of various sizes. It is possible for one disc to have a different shape or size to the other disc of the pair. The discs are preferably inclined to one another, e.g. up to an angle of 45° and preferably from 25° to 35° to the axis of conveyance of the confectionery product. Advantageously, the inclination is such that the edges of the discs downstream of the direction of conveyance of the confectionery product are closer than the edges of the discs upstream of the direction of conveyance of the confectionery product.

The discs are preferably mounted facing the front and rear center of the bars. The bar may be passed, for example, vertically or horizantally between the discs. The spinning of the discs may be achieved, for instance, by a variable drive motor for each disc or one or more motors and a timing belt. The design on the confectionery product may be controlled by the speed of the spinning discs. The speed of the discs is preferably at least 50rpm and may be up to 2500rpm or more, depending on the space constraints dictated by the machine the product is to be made on. The speed of the disc which produces stripes or spots is a function of the distance between the disc and the product to be coated. The spinning discs may be mounted inside a jacketed tank heated to from 35° to 45°C by circulating heated water. The tank is conveniently made of stainless steel. The heated jacket enables the excess coating material that has been projected by centrifugal force from the spinning discs, after coating the confectionery product with the second coating material, to hit the inside of the tank in a liquid form and then exit the tank for recirculation.

In a further advantageous embodiment of the present invention, a confectionery product with a coating having the appearance of either stripes or spots may be obtained by applying a first coating material to the confectionery product by enrobing, spraying or dipping to coat the confectionery product with a first layer of coating material, and then passing the confectionery product vertically past a spinning hollow vessel provided with at least one lateral aperture from which are projected one or more streams of a second coating material by centrifugal force onto the coated confectionery product, and then solidifying the coating. The hollow vessel may be provided with an upper opening through which the second coating material may be fed by pumping the coating material through tubing, e.g. stainless steel, into the opening. During the spinning, the coating floods the and covers the inner wall of the hollow vessel. The lower end of the hollow vessel is provided with a central opening mounted on a spindle with a hollow shaft through which excess coating passes conveniently for collection and recirculation. The hollow vessel may be, for example, cup shaped, mushroom shaped or cylindrical shaped.

A similar effect to that provided by the pair of spinning discs projecting the second coating onto the confectionery product having a first layer of coating may be created using a high pressure jet of second coating impinging upon a static profiled surface from which the coating is sprayed onto the confectionery product. The high pressure jet may be produced by means of, for example, a high pressure gun provided with a nozzle having a diameter of from 0.05 to 4mm and preferably from 0.1 to 0.25mm. A simple valve may be used to stop and start the jets. The pressure is conveniently from 20 to 100bar, preferably from 40-70bar and more preferably from 45-65bar. The static profiled surface preferably has a sharp edge and advantageously the sharp edge is adjustable about a horizontal axis in order to aim the jet. This process could reduce or eliminate the need for recirculation of the coating material, particularly if there is a requirement to spray two different coating materials at the same time, or if the primary coating was still dripping at the point of the second coating application.

In all the above processes for preparing a confectionery or ice cream product with a chocolate coating having a marbled appearance, the chocolate used may be tempered or untempered chocolate, is liquid, and the temperature may be from 28° to 60°C, preferably from 35° to 45°C.

In all the above processes for preparing a confectionery or ice cream product with a water-based coating having a marbled appearance, the temperature of usage of the water-based material is preferably such that its viscosity is similar to that of liquid chocolate used for coatings and may be, for instance, from -3°C to +40°C.

### EXAMPLES

The following Examples further illustrate the present invention.

### Example 1

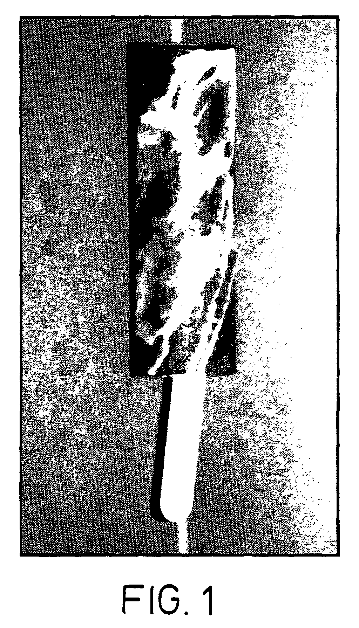

The accompanying Figure 1 illustrates an ice cream bar coated with white and milk chocolate having a marbled appearance. The coating is made in two halves in a mould of polycarbonate whereby each half is made by laying 0.5mm strips of liquid white and milk chocolate randomly across the mould using movable nozzles whose openings have a diameter of 2mm. An air stream blown onto the strips to modify the surface configuration. The chocolate is shelled out by immediately adding liquid chocolate to completely fill the mould, followed by vibrating to remove air bubbles. The mould is then inverted with further vibration to create a shell of total thickness of 1.5 to 2mm. The two halves of the mould are the brought together in such a way that the chocolate shells join together to form a hollow sealed 3D shape. The hollow shape is cooled, and removed from the mould to be placed into a holding device. A probe is used to create a hole at one end of the hollow shell, such that liquid ice cream at -2.5°C can be injected into the centre. A stick is added, sealed into place with chocolate and the whole product is finally cooled at -35°C to freeze the ice cream.

### Example 2

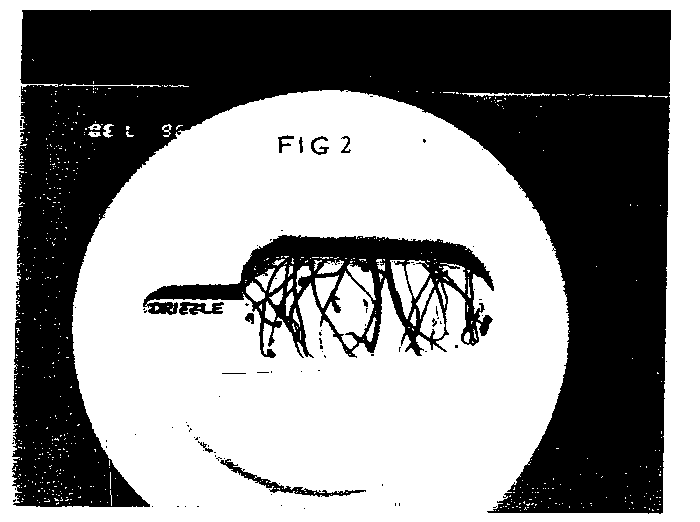

The accompanying Figure 2 illustrates an ice cream bar coated with white and plain chocolate having a drizzle appearance. The ice cream bar is dipped into a white chocolate within a container to coat it with a first layer of white chocolate. The ice cream coated with the first layer of white chocolate is withdrawn from the first container and a continuous stream of a plain chocolate is projected randomly past the coated confectione product by means of moving spray nozzles operated by a pump generating a pressure of 689.5 x 10³ Pa (100 psi). The coating is then solidified.

### Example 3

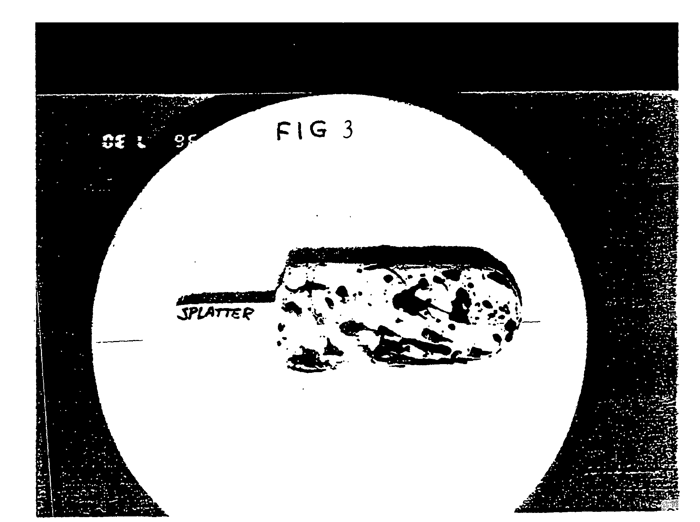

The accompanying Figure 3 illustrates an ice cream bar coated with white and plain chocolate having a splatter appearance. A similar procedure to that described in Example 2 is followed except that the flow of the plain chocolate is interrupted to give a discontinuous stream which produces a splattered effect.

### Example 4

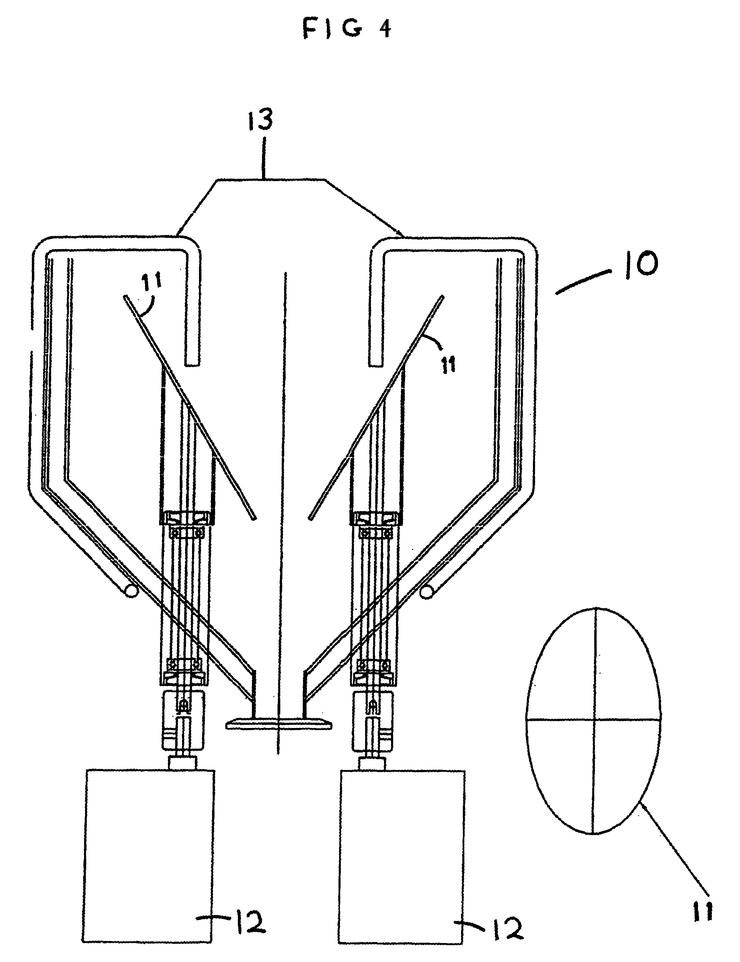

The accompanying Figure 4 illustrates an apparatus for preparing a confectionery product with a chocolate coating having the appearance of either stripes or spots using a pair of spinning discs. The apparatus comprises a jacketed tank (10) made of stainless steel heated to 40°C by circulating heated water, mounted within which are a pair of elliptically shaped inclined spinning discs (11) made of stainless steel driven separately by a pair of drive motors (12).

In operation, an ice cream bar coated with a first layer of white chocolate (not shown) is passed downwards in the jacketed tank (10) between the spinning discs (11) so that the front and rear center of the bar faces the discs. Milk chocolate is applied to the spinning discs rotating at a speed of from 100 to 2000rpm by pumping the chocolate from a chocolate source through stainless steel tubing (13) onto the spinning discs and is projected by centrifugal force from the spinning discs onto the front and rear faces of the ice cream bar to give a striped or spotted appearance depending on the speed of the spinning discs. Excess milk chocolate that has been projected by centrifugal force from the spinning discs which did not coat the ice cream bar hits the inside of the tank in a liquid form and then exits the tank for recirculation.

### Example 5

A procedure similar to that described in Example 4 is followed except that the temperature of the jacketed tank is +4°C and the ice cream bar is coated with two water-based coating materials having the following constitution:

| | |
|---|---|
| MILK SKIMMED POWDER SPRAY | 3.4% |
| SYRUP GLUCOSE SPRAY DRIED DE 36-39 POWDER | 3.1% |
| SUGAR LIQUID 68% SOLIDS (SUCROSE) | 12.5% |
| STARCH MAIZE MODIFIED H COL FLO 67 | 0.8% |
| WATER | 44.0% |
| LGC 450 | 1.5% |
| CHOCOLATE WHITE | 21.0% |
| CREAM MILK PASTEURISED 35% FAT LIQUID | 12.0% |
| CARRAGEENAN SATIAGEL DF 11 (VIENNOIS) | 0.12% |
| LECITHIN | 0.10% |
| COCOA BUTTER 1.40% COLOUR | 0.08% |

The only difference between the two coatings is the colour wherein the first layer is red and the second layer giving the striped or spotted appearance is light blue.

## Claims

1. A coated ice confectionery product comprising a core of ice confectionery,
a first coating material which entirely recovers the core with a continuous layer,
a second coating material raised over the first coating and directly adhered to the first coating and which is in the form of projected streams or spots forming a drizzle, striped, striated, veined or splattered pattern all over the surface of the first coating.

2. A coated ice confectionery product according to claim 1, wherein the first continuous layer and the second patterned layer are formed from coating materials of different colours.

3. A coated ice confectionery product according to claim 1, wherein the first and the second coating materials are water-based.

4. A process for preparing a coating having a marbled appearance which comprises laying strips of liquid coating material across a mould, modifying the surface or configuration of the strips, and before any significant degree of solidification of the strips occurs, filling the mould with an appropriate coating material and solidifying the coating material.

5. A process according to claim 4 wherein the strips of coating material are laid in a random manner on the mould by means of one or more nozzles through which the coating material flows.

6. A process according to claim 4 wherein the surface or configuration of the strips is modified by either an air stream blowing onto the surface or by dragging one or more probes across the surface to give random or streaked effects forming surface impressions.

7. A process for preparing a confectionery or ice cream product provided with a coating having a drizzle appearance with a roughly continuous stripe formed from two layers of coating materials which comprises applying a first coating material to the confectionery product by enrobing, spraying or dipping to coat the confectionery product with a first layer of coating material, and then projecting a continuous stream of a second coating material randomly past the coated confectionery product and solidifying the coating.

8. A process according to claim 7 for preparing a confectionery or ice cream product provided with a coating having a drizzle appearance with a roughly continuous stripe formed from two layers of coating materials which comprises dipping the confectionery or ice cream product into a first coating material within a container to coat the confectionery or ice cream product, withdrawing the coated confectionery or ice cream product from the container and then projecting a continuous stream of a second coating material randomly past the coated confectionery or ice cream product and solidifying the coating.

9. A process for preparing a confectionery or ice cream product with a coating having a splatter appearance with a roughly discontinuous stripe formed from two layers of coating materials which comprises applying a first coating material to the confectionery or ice cream product by enrobing, spraying or dipping to coat the confectionery or ice cream product with a first layer of coating material, and then projecting a discontinuous stream of a second coating material randomly past the coated confectionery or ice cream product by interrupting the flow of the second coating material and solidifying the coating.

10. A process for preparing a confectionery product with a coating having the appearance of either stripes or spots by applying a first coating material to the confectionery product by enrobing, spraying or dipping to coat the confectionery product with a first layer of coating material, and then passing the confectionery product between the opposing faces of a pair of spinning discs from which are projected streams of a second coating material by centrifugal force onto the coated confectionery product, and then solidifying the coating.

11. A process for preparing a confectionery product with a coating having the appearance of either stripes or spots by applying a first coating material to the confectionery product by enrobing, spraying or dipping to coat the confectionery product with a first layer of coating material, and then projecting a second coating onto the confectionery product having a first layer of coating using a high pressure jet of second coating impinging upon a static profiled surface from which the coating is sprayed onto the confectionery product.

12. A process for preparing a confectionery product with a coating having the appearance of either stripes or spots by applying a first coating material to the confectionery product by enrobing, spraying or dipping to coat the confectionery product with a first layer of coating material, and then passing the confectionery product vertically past a spinning hollow vessel provided with at least one lateral aperture from which are projected one or more streams of a second coating material by centrifugal force onto the coated confectionery product, and then solidifying the coating.

13. A process according to claim 12 wherein the hollow vessel is provided with an upper opening through which the second coating material is fed by pumping the coating material through tubing into the opening.

14. A process according to claim 12 wherein the lower end of the hollow vessel is provided with a central opening mounted on a spindle with a hollow shaft through which excess coating passes.

## Patentansprüche

1. Beschichtetes Eis-Süßspeisenprodukt mit
einem Kern aus Speiseeis,
einem ersten Beschichtungsmaterial, das den Kern mit einer durchgehenden Schicht vollständig bedeckt,
einem zweiten Beschichtungsmaterial, das über das erste Beschichtungsmaterial aufgebracht ist und direkt an der ersten Beschichtung haftet, und das in Form von vorstehenden Strömen oder Stellen unter Bildung eines aufgesprühten, gestreiften, mit Schlieren versehenen, marmorierten oder gesprenkelten Musters über der gesamten Oberfläche der ersten Schicht vorliegt.

2. Beschichtetes Eis-Süßspeisenprodukt nach Anspruch 1, worin die erste durchgehende Schicht und die zweite gemusterte Schicht aus Beschichtungsmaterialien mit unterschiedlichen Farben gebildet sind.

3. Beschichtetes Eis-Süßspeisenprodukt nach Anspruch 1, worin das erste und das zweite Beschichtungsmaterial auf Wasser basiert.

4. Verfahren zur Herstellung einer Beschichtung mit einem marmoriertem Erscheinungsbild, welches umfasst, Legen von Streifen von flüssigem Beschichtungsmaterial über eine Gießform, Modifizieren der Oberfläche oder Konfiguration der Streifen, und, bevor die Streifen zu einem wesentlichen Ausmaß verfestigen, Füllen der Gießform mit einem geeigneten Beschichtungsmaterial und Verfestigen des Beschichtungsmaterials.

5. Verfahren nach Anspruch 4, wobei die Streifen des Beschichtungsmaterials mittels Düsen, durch die das Beschichtungsmaterial strömt, in zufälliger Art in die Gießform gelegt werden.

6. Verfahren nach Anspruch 4, wobei die Oberfläche oder Konfiguration der Streifen modifiziert werden durch entweder einen Luftstrom, der auf die Oberfläche geblasen wird, oder durch Ziehen von einer oder mehrerer Proben über die Oberfläche, um zufällige oder Streifen-Effekte zu erzeugen, die Oberflächenbildnisse ergeben.

7. Verfahren zur Herstellung eines Süßspeisen oder Eiscreme-Produkts mit einer Beschichtung, die ein gesprühtes Erscheinungsbild mit einem annähernd durchgehenden Streifen aufweist, der aus den zwei Schichten des Beschichtungsmaterials gebildet ist, welches umfasst, Auftragen eines ersten Beschichtungsmaterials auf das Süßspeisenprodukt durch Umhüllen, Sprühen oder Eintauchen, um das Süßspeisenprodukt mit einer ersten Schicht von Beschichtungsmaterial zu beschichten, und dann Ausgeben eines kontinuierlichen Stroms eines zweiten Beschichtungsmaterials in zufälliger Weise über das beschichtete Süßspeisenprodukt und Verfestigen der Beschichtung.

8. Verfahren nach Anspruch 7 zur Herstellung eines Süßspeisen oder Eiscreme-Produktes, das mit einer Beschichtung mit aufgesprühtem Erscheinungsbild mit einem aus zwei Schichten von Beschichtungsmaterialien gebildeten, annähernd durchgehenden Streifen versehen ist, welches umfasst, Eintauchen der Süßspeise oder des Eiscremeproduktes in ein erstes, in einem Behälter vorliegenden Beschichtungsmaterial, um die Süßspeise oder das Eiscremeprodukt zu beschichten, Herausnehmen des beschichteten Süßspeisen oder Eiscremeproduktes aus dem Behälter und dann Ausgeben eines kontinuierlichen Stroms eines zweiten Beschichtungsmaterials in zufälliger Art und Weise über das beschichtete Süßspeisen oder Eiscreme-Produkt, und Verfestigen der Beschichtung.

9. Verfahren zur Herstellung eines Süßspeisen oder Eiscreme-Produktes mit einer Beschichtung mit einem gesprenkeltem Erscheinungsbild mit einem annähernd durchgehenden Streifen aus zwei Schichten des Beschichtungsmaterials, welches umfasst, Auftragen eines ersten Beschichtungsmaterials auf das Süßspeisen oder Eiscreme-Produkt durch Umhüllen, Sprühen oder Eintauchen, um das Süßspeisen oder Eiscreme-Produkt mit einer ersten Schicht von Beschichtungsmaterial zu beschichten, und dann Ausgeben eines nicht-kontinuierlichen Stroms eines zweiten Beschichtungsmaterials in zufälliger Art und Weise über die beschichtete Süßspeise oder das beschichtete Eiscreme-Produkt durch Unterbrechen des Stroms des zweiten Beschichtungsmaterials, und Verfestigen der Beschichtung.

10. Verfahren zur Herstellung eines Süßspeisen-Produktes mit einer Beschichtung, die ein Erscheinungsbild von entweder Streifen oder Punkten aufweist, durch Auftragen eines ersten Beschichtungsmaterials auf das Süßspeisenprodukt durch Umhüllen, Sprühen oder Eintauchen, um das Süßspeisenprodukt mit einer ersten Schicht von Beschichtungsmaterial zu beschichten, und dann Leiten des Süßspeisenproduktes zwischen gegenüberliegende Flächen eines Paars von zwei sich drehenden Scheiben, von denen aus Ströme eines zweiten Beschichtungsmaterials durch Zentrifugalkraft auf das beschichtete Süßspeisenprodukt ausgegeben werden, und dann Verfestigen der Beschichtung.

11. Verfahren zur Herstellung eines Süßspeisenproduktes mit einer Beschichtung, die ein Erscheinungsbild von entweder Streifen oder Punkten aufweist, durch Auftragen eines ersten Beschichtungsmaterials auf das Süßspeisenprodukt durch Umhüllen, Sprühen oder Eintauchen, um das Süßspeisenprodukt mit einer ersten Schicht von Beschichtungsmaterial zu beschichten, und dann Ausgeben einer zweiten Beschichtung auf das Süßspeisenprodukt mit einer ersten Schicht der Beschichtung, wobei ein Hochdruckstahl eines zweiten Beschichtungsmaterials eingesetzt wird, das auf eine mit einem Profil versehene statische Oberfläche auftrifft, von der die Beschichtung auf das Süßspeisenprodukt gesprüht wird.

12. Verfahren zur Herstellung eines Süßspeisen-Produktes mit einer Beschichtung, die ein Erscheinungsbild von entweder Streifen oder Punkten aufweist, indem ein erstes Beschichtungsmaterial auf das Süßspeisenprodukt durch Umhüllen, Sprühen oder Eintauchen, aufgetragen wird, um das Süßspeisenprodukt mit einer ersten Schicht von Beschichtungsmaterial zu beschichten, und dann das Süßspeisenprodukt vertikal über einen sich drehenden hohlen Kessel geleitet wird, der mit mindestens einer lateralen Öffnung versehen ist, von der aus ein oder mehrere Ströme eines zweiten Beschichtungsmaterials durch Zentrifugalkraft auf das beschichtete Süßspeisenprodukt ausgegeben werden, worauf die Beschichtung verfestigt wird.

13. Verfahren nach Anspruch 12, wobei der hohle Kessel mit einer oberen Öffnung versehen ist, durch die das zweite Beschichtungsmaterial durch Pumpen des Beschichtungsmaterials durch eine Röhre in die Öffnung geführt wird.

14. Verfahren nach Anspruch 12, wobei das untere Ende des hohlen Kessels mit einer zentralen Öffnung versehen ist, die auf einer Achse mit einer hohlen Welle angebracht ist, durch die überschüssiges Beschichtungsmaterial gelangt.

## Revendications

1. Produit de confiserie consistant en glace enrobée, comprenant un noyau d'un produit de confiserie consistant en une glace,
une première matière d'enrobage qui recouvre totalement le noyau avec une couche continue,
une seconde matière d'enrobage appliquée sur le premier enrobage et adhérant directement au premier enrobage et qui est sous forme de courante ou de taches projetés formant un motif ruisselant, rayé, strié, veiné ou éclaboussé sur la totalité de la' surface du premier enrobage.

2. Produit de confiserie consistant en glace enrobée suivant la revendication 1, dans lequel la première couche continue et la seconde couche munie d'un motif sont formées à partir de matières d'enrobage ayant des couleurs différentes.

3. Produit de confiserie consistant en glace enrobée suivant la revendication 1, dans lequel les première et seconde matières d'enrobage sont aqueuses.

4. Procédé pour la préparation d'un enrobage ayant un aspect marbré, qui comprend les étapes consistant à déposer des bandes d'une matière liquide d'enrobage à travers un moule, à modifier la surface ou la configuration des bandes et, avant qu'un quelconque degré significatif de solidification des bandes ne se produise, à remplir le moule avec une matière d'enrobage appropriée et à provoquer la solidification de la matière d'enrobage.

5. Procédé suivant la revendication 4, dans lequel les bandes de matière d'enrobage sont déposées de manière aléatoire sur le moule au moyen d'une ou plusieurs buses à travers desquelles s'écoule la matière d'enrobage.

6. Procédé suivant la revendication 4, dans lequel la surface ou configuration des bandes est modifiée en soufflant un courant d'air sur la surface ou en tirant une ou plusieurs sondes à travers la surface pour obtenir des effets aléatoires ou striés formant des impressions de surface.

7. Procédé pour la préparation d'un produit de confiserie ou d'une crème glacée muni(e) d'un enrobage ayant un aspect ruisselant avec une bande approximativement continue formée de deux couches de matières d'enrobage, qui comprend les étapes consistant à appliquer une première matière d'enrobage au produit de confiserie par enrobage, pulvérisation ou trempage pour enrober le produit de confiserie avec une première couche de matière d'enrobage, puis à projeter un courant continu d'une seconde matière d'enrobage de manière aléatoire au-delà du produit de confiserie enrobé et à provoquer la solidification de l'enrobage.

8. Procédé suivant la revendication 7 pour la préparation d'un produit de confiserie ou d'une crème glacée muni(e) d'un enrobage ayant un aspect ruisselant avec une bande approximativement continue formée de deux couches de matières d'enrobage, qui comprend les étapes consistant à tremper le produit de confiserie ou la crème glacée dans une première matière d'enrobage dans un récipient pour enrober le produit de confiserie ou la crème glacée, à retirer le produit de confiserie enrobé ou la crème glacée enrobée du récipient, puis à projeter un courant continu d'une seconde matière d'enrobage de manière aléatoire au-delà du produit de confiserie enrobé ou de la crème glacée enrobée et à provoquer la solidification de l'enrobage.

9. Procédé pour la préparation d'un produit de confiserie ou d'une crème glacée muni(e) d'un enrobage ayant un aspect éclaboussé avec une bande approximativement discontinue formée de deux couches de matières d'enrobage, qui comprend les étapes consistant à appliquer une première matière d'enrobage au produit de confiserie ou à la crème glacée par enrobage, pulvérisation où trempage pour enrober le produit de confiserie ou la crème glacée avec une première couche de matière d'enrobage, puis à projeter un courant discontinu d'une seconde matière d'enrobage de manière aléatoire au-delà du produit de confiserie enrobé ou de la crème glacée enrobée en interrompant l'écoulement de la seconde matière d'enrobage et à provoquer la solidification de l'enrobage.

10. Procédé pour la préparation d'un produit de confiserie muni d'un enrobage ayant l'aspect de bandes ou de taches en appliquant une première matière d'enrobage au produit de confiserie par enrobage, pulvérisation ou trempage pour enrober le produit de confiserie avec une première couche de matière d'enrobage, puis en faisant passer le produit de confiserie entre les faces opposées d'une paire de disques rotatifs desquels sont projetés des courants d'une seconde matière d'enrobage par la force centrifuge sur le produit de confiserie enrobé, puis en solidifiant l'enrobage.

11. Procédé pour la préparation d'un produit de confiserie muni d'un enrobage ayant l'aspect de bandes ou de taches en appliquant une première matière d'enrobage au produit de confiserie par enrobage, pulvérisation ou trempage pour enrober le produit de confiserie avec une première couche de matière d'enrobage, puis en projetant un second enrobage sur le produit de confiserie portant une première couche d'enrobage en utilisant un jet haute pression du second enrobage frappant une surface profilée statique de laquelle l'enrobage est pulvérisé sur le produit de confiserie.

12. Procédé pour la préparation d'un produit de confiserie muni d'un enrobage ayant l'aspect de bandes ou de taches en appliquant une première matière d'enrobage au produit de confiserie par enrobage, pulvérisation ou trempage pour enrober le produit de confiserie avec une première couche de matière d'enrobage, puis en faisant passer le produit de confiserie verticalement au-delà d'un récipient creux rotatif muni d'au moins une ouverture latérale de laquelle sont projetés un ou plusieurs courants d'une seconde matière d'enrobage par la force centrifuge sur le produit de confiserie enrobé, puis en solidifiant l'enrobage.

13. Procédé suivant la revendication 12, dans lequel le récipient creux est muni d'un orifice supérieur à travers lequel la seconde matière d'enrobage est amenée par pompage de la matière d'enrobage à travers une tubulure dans l'orifice.

14. Procédé suivant la revendication 12, dans lequel l'extrémité inférieure du récipient creux est munie d'un orifice central monté sur une broche avec un arbre creux à travers lequel passe l'excès d'enrobage.
